(19)

Europäisches
Patentamt
European
Patent Office
Office européen
des brevets

(11) **EP 2 109 313 B1**

(12) **EUROPEAN PATENT SPECIFICATION**

(45) Date of publication and mention
of the grant of the patent:
**13.01.2016 Bulletin 2016/02**

(51) Int Cl.:
***H04N 5/445*** *(2006.01)*

(21) Application number: **08251384.7**

(22) Date of filing: **09.04.2008**

(54) **Television receiver and method**

Fernsehempfänger und Verfahren

Récepteur de télévision et procédé

(84) Designated Contracting States:
**DE FR GB NL**

(43) Date of publication of application:
**14.10.2009 Bulletin 2009/42**

(73) Proprietor: **Sony Computer Entertainment Europe
Limited
London W1F 7LP (GB)**

(72) Inventors:
• **Godar, Anthony William
c/o Sony Computer E.E.Ltd.
London W1F 7LP (GB)**

• **de Gomes Moreira, S.P.
c/o Sony Computer E.E.Ltd.
London W1F 7LP (GB)**

(74) Representative: **D Young & Co LLP
120 Holborn
London EC1N 2DY (GB)**

(56) References cited:
**US-A1- 2008 016 142     US-B1- 6 937 766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a television receiver and method.

Various applications employ the analysis of video images to extract predetermined kinds of information. A first example is automatic car number plate recognition, often used at long-term car parks to verify bookings by capturing an image of the car number plate using a video camera (see reference i. herein). A second example is a system that identifies brand logos in broadcast television, for example to determine the amount of airtime obtained by a billboard advert during coverage of a football match (see reference ii.). A further example assists in an archiving service for television studios by using optical character recognition to read metadata recorded as a text image at the start of video tapes, so this metadata can be entered into an archive database (see reference iii.). Such optical character recognition (OCR) is also used more conventionally to generate electronic copies of text from scanned documents. US-B1-6937766 (Wilf) discloses recognising text from video images, whilst US-A-2008/016142 (Schneider) discloses generating hypertext links from conventional text associated with broadcasts.

It will be appreciated that other applications may benefit from the analysis of video images. The present invention provides means and a method by which such a further application can benefit.

In a first aspect of the present invention, a television receiver comprises an optical character recogniser to identify text in a received video image, and a hypertext link generator to generate a hypertext link responsive to respective identified text, and the television receiver is operable to form a connection to a network in accordance with the hypertext link in which the hypertext link has a default target that comprises as an argument at least part of the content of the respective identified text, and the default target is selected according to the context of the received video image, in which the default target and context are one or more selected from the list consisting of: selection of a movie-related default target in the context of vertically scrolling text; selection of a news-related default target in the context of horizontally scrolling text; and selection of a general search default target in the context of static text.

In another aspect of the present invention, a method of operation of a television receiver comprises the steps of receiving a video image, applying optical character recognition to some or all of the video image to identify text in the video image, generating a hypertext link responsive to respective identified text, selecting a default hypertext link target according to the context of the received video image, and forming a connection to a network in accordance with the default hypertext link target, the default hypertext link target further comprising as an argument at least part of the content of the respective identified text, in which the default target and context are one or more selected from the list consisting of: selection of a movie-related default target in the context of vertically scrolling text; selection of a news-related default target in the context of horizontally scrolling text; and selection of a general search default target in the context of static text.

Advantageously, therefore, a user can select text of interest within viewed television programmes and receive additional content related to that text from the internet or some other remote source.

Further respective aspects and features of the invention are defined in the appended claims.

Embodiments of the present invention will now be described by way of example with reference to the accompanying drawings, in which:

Figure 1 is a schematic diagram of an entertainment device;
Figure 2 is a schematic diagram of a cell processor;
Figure 3 is a schematic diagram of a video graphics processor;
Figure 4 is a schematic diagram of a TV image showing TV reception circuitry in accordance with an embodiment of the present invention;
Figure 5A is a schematic diagram of a TV image showing an advert;
Figure 5B is a schematic diagram of a TV image showing an advert with image processing in accordance with an embodiment of the present invention;
Figure 6 is a schematic diagram of regions of a TV image;
Figure 7 is a schematic diagram of a TV image showing a TV credit;
Figure 8 is a schematic diagram of a hue histogram in accordance with an embodiment of the present invention; and
Figure 9 is a flow diagram of a method of television interaction in accordance with an embodiment of the present invention.

A video image analyser and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a user is watching broadcast television on a receiver comprising a Sony ® Playstation 3 ® (PS3®) coupled to TV signal reception circuitry. The receiver analyses the currently displayed frame of the TV programme to identify any text in the video image, and where such text is found, determines whether that text corresponds to a means of connecting the user to a remote source of information; for example, a web page or phone number displayed on screen. Consequently, if the user operates a controller of the PS3 to move a pointer to the relevant text, the PS3 can display the web page referred to in the TV image (for example in as a side bar occupying 1/3 of the screen, optionally partially transparent), or call the phone number, either directly via a voice-over-internet protocol application, or via a Bluetooth® link to the user's mobile phone.

Similarly, other text can be identified as potential search terms to be submitted to an internet search engine - for example film credits, having a characteristic arrangement of two columns of white text on a black background, can be identified as such and the text within parsed as search arguments for an internet movie database (e.g. imdb.com), thereby enabling a user to click on an actor or character name and receive additional information about them.

In this way, broadcast television in general can be interpreted by the receiver as web-style hypertext, providing access to a wealth of secondary information for the viewer and enriching their viewing experience.

It will be appreciated that a television receiver is considered herein to be a device capable of receiving a television signal and generating an image signal suitable for subsequent display on a television screen or equivalent. In embodiments of the present invention the received television signal may be broadcast television received via an aerial or satellite dish, and received either directly or after being recorded locally upon initial reception, or the signal may be decoded from a pre-recorded medium such as a DVD. Any or all of the display, video recorder or media player may be integrated with the television receiver or may be separate items.

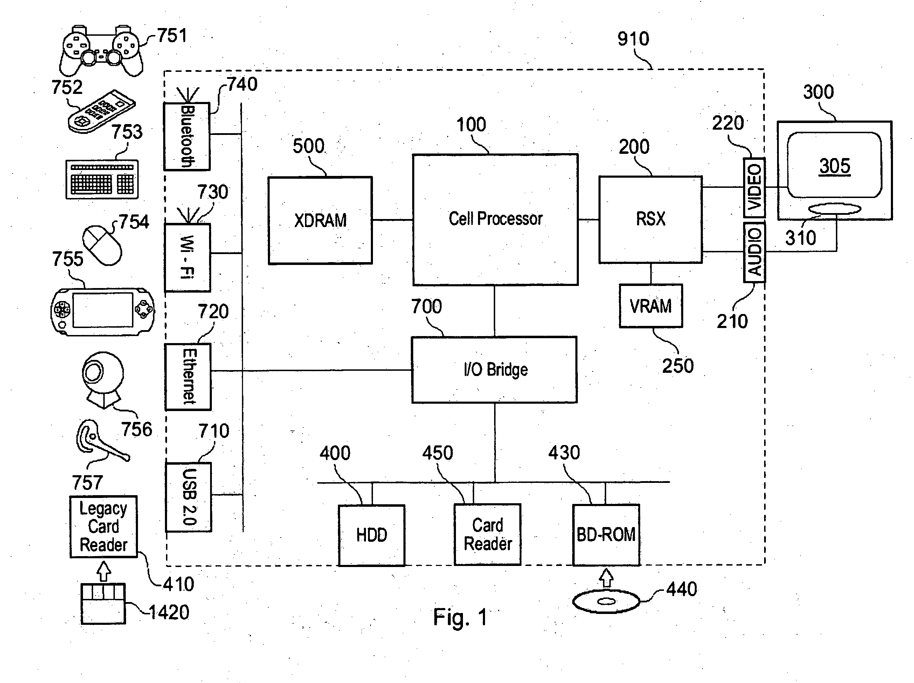

Referring now to Figures 1 to 4, in an embodiment of the present invention the receiver comprises a Sony® Playstation 3® entertainment device coupled to a dual digital TV tuner.

Figure 1 schematically illustrates the overall system architecture of the Sony® Playstation 3® entertainment device. A system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting up to seven Bluetooth connections.

In operation the I/O bridge 700 handles all wireless, USB and Ethernet data, including data from one or more game controllers 751. For example when a user is playing a game, the I/O bridge 700 receives data from the game controller 751 via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera such as an EyeToy® video camera 756; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In the present embodiment, the game controller 751 is operable to communicate wirelessly with the system unit 10 via the Bluetooth link. However, the game controller 751 can instead be connected to a USB port, thereby also providing power by which to charge the battery of the game controller 751. In addition to one or more analogue joysticks and conventional control buttons, the game controller is sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the Playstation Portable device may be used as a controller. In the case of the Playstation Portable device, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content.

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

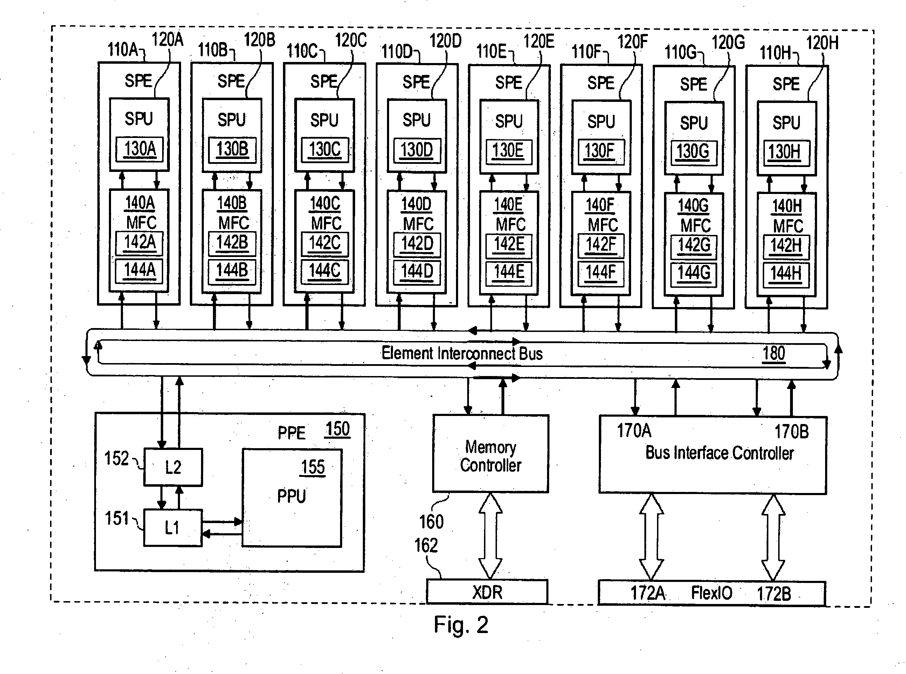

Referring now to Figure 2, the Cell processor 100 has an architecture comprising four basic components: external input and output structures comprising a memory controller 160 and a dual bus interface controller 170A,B; a main processor referred to as the Power Processing Element 150; eight co-processors referred to as Synergistic Processing Elements (SPEs) 110A-H; and a circular data bus connecting the above components referred to as the Element Interconnect Bus 180. The total floating point performance of the Cell processor is 218 GFLOPS, compared with the 6.2 GFLOPs of the Playstation 2 device's Emotion Engine.

The Power Processing Element (PPE) 150 is based upon a two-way simultaneous multithreading Power 970 compliant PowerPC core (PPU) 155 running with an internal clock of 3.2 GHz. It comprises a 512 kB level 2 (L2) cache and a 32 kB level 1 (L1) cache. The PPE 150 is capable of eight single position operations per clock cycle, translating to 25.6 GFLOPs at 3.2 GHz. The primary role of the PPE 150 is to act as a controller for the Synergistic Processing Elements 110A-H, which handle most of the computational workload. In operation the PPE 150 maintains a job queue, scheduling jobs for the Synergistic Processing Elements 110A-H and monitoring their progress. Consequently each Synergistic Processing Element 110A-H runs a kernel whose role is to fetch a job, execute it and synchronise with the PPE 150.

Each Synergistic Processing Element (SPE) 110A-H comprises a respective Synergistic Processing Unit (SPU) 120A-H, and a respective Memory Flow Controller (MFC) 140A-H comprising in turn a respective Dynamic Memory Access Controller (DMAC) 142A-H, a respective Memory Management Unit (MMU) 144AH and a bus interface (not shown). Each SPU 120A-H is a RISC processor clocked at 3.2 GHz and comprising 256 kB local RAM 130A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 120A-H does not directly access the system memory XDRAM 500; the 64-bit addresses formed by the SPU 120A-H are passed to the MFC 140A-H which instructs its DMA controller 142A-H to access memory via the Element Interconnect Bus 180 and the memory controller 160.

The Element Interconnect Bus (EIB) 180 is a logically circular communication bus internal to the Cell processor 100 which connects the above processor elements, namely the PPE 150, the memory controller 160, the dual bus interface 170A,B and the 8 SPEs 110A-H, totalling 12 participants. Participants can simultaneously read and write to the bus at a rate of 8 bytes per clock cycle. As noted previously, each SPE 110A-H comprises a DMAC 142A-H for scheduling longer read or write sequences. The EIB comprises four channels, two each in clockwise and anticlockwise directions. Consequently for twelve participants, the longest step-wise dataflow between any two participants is six steps in the appropriate direction. The theoretical peak instantaneous EIB bandwidth for 12 slots is therefore 96B per clock, in the event of full utilisation through arbitration between participants. This equates to a theoretical peak bandwidth of 307.2 GB/s (gigabytes per second) at a clock rate of 3.2GHz.

The memory controller 160 comprises an XDRAM interface 162, developed by Rambus Incorporated. The memory controller interfaces with the Rambus XDRAM 500 with a theoretical peak bandwidth of 25.6 GB/s.

The dual bus interface 170A,B comprises a Rambus FlexIO® system interface 172A,B. The interface is organised into 12 channels each being 8 bits wide, with five paths being inbound and seven outbound. This provides a theoretical peak bandwidth of 62.4 GB/s (36.4 GB/s outbound, 26 GB/s inbound) between the Cell processor and the I/O Bridge 700 via controller 170A and the Reality Simulator graphics unit 200 via controller 170B.

Data sent by the Cell processor 100 to the Reality Simulator graphics unit 200 will typically comprise display lists, being a sequence of commands to draw vertices, apply textures to polygons, specify lighting conditions, and so on.

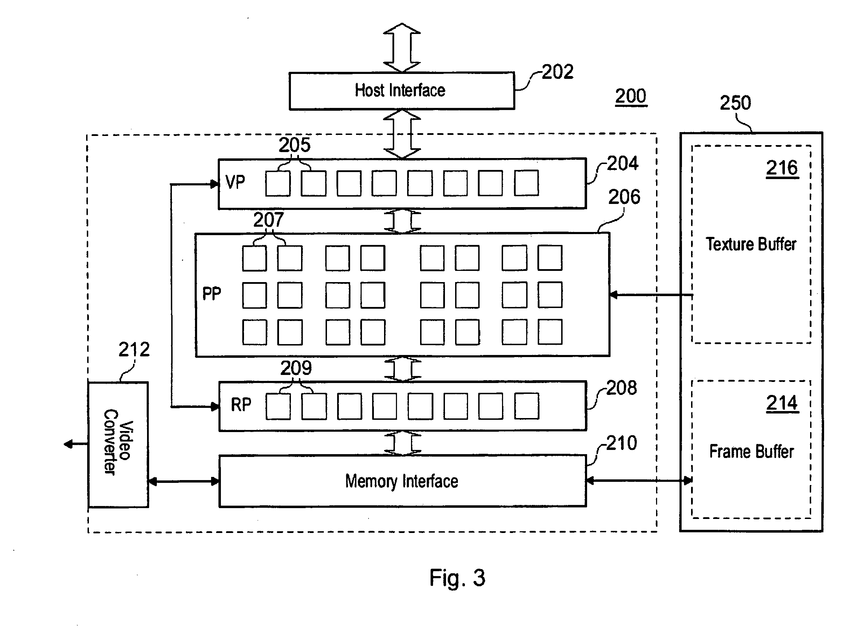

Referring now to Figure 3, the Reality Simulator graphics (RSX) unit 200 is a video accelerator based upon the NVidia® G70/71 architecture that processes and renders lists of commands produced by the Cell processor 100. The RSX unit 200 comprises a host interface 202 operable to communicate with the bus interface controller 170B of the Cell processor 100; a vertex pipeline 204 (VP) comprising eight vertex shaders 205; a pixel pipeline 206 (PP) comprising 24 pixel shaders 207; a render pipeline 208 (RP) comprising eight render output units (ROPs) 209; a memory interface 210; and a video converter 212 for generating a video output. The RSX 200 is complemented by 256 MB double data rate (DDR) video RAM (VRAM) 250, clocked at 600MHz and operable to interface with the RSX 200 at a theoretical peak bandwidth of 25.6 GB/s. In operation, the VRAM 250 maintains a frame buffer 214 and a texture buffer 216. The texture buffer 216 provides textures to the pixel shaders 207, whilst the frame buffer 214 stores results of the processing pipelines. The RSX can also access the main memory 500 via the EIB 180, for example to load textures into the VRAM 250.

The vertex pipeline 204 primarily processes deformations and transformations of vertices defining polygons within the image to be rendered.

The pixel pipeline 206 primarily processes the application of colour, textures and lighting to these polygons, including any pixel transparency, generating red, green, blue and alpha (transparency) values for each processed pixel. Texture mapping may simply apply a graphic image to a surface, or may include bump-mapping (in which the notional direction of a surface is perturbed in accordance with texture values to create highlights and shade in the lighting model) or displacement mapping (in which the applied texture additionally perturbs vertex positions to generate a deformed surface consistent with the texture).

The render pipeline 208 performs depth comparisons between pixels to determine which should be rendered in the final image. Optionally, if the intervening pixel process will not affect depth values (for example in the absence of transparency or displacement mapping) then the render pipeline and vertex pipeline 204 can communicate depth information between them, thereby enabling the removal of occluded elements prior to pixel processing, and so improving overall rendering efficiency. In addition, the render pipeline 208 also applies subsequent effects such as full-screen anti-aliasing over the resulting image.

Both the vertex shaders 205 and pixel shaders 207 are based on the shader model 3.0 standard. Up to 136 shader operations can be performed per clock cycle, with the combined pipeline therefore capable of 74.8 billion shader operations per second, outputting up to 840 million vertices and 10 billion pixels per second. The total floating point performance of the RSX 200 is 1.8 TFLOPS.

Typically, the RSX 200 operates in close collaboration with the Cell processor 100; for example, when displaying an explosion, or weather effects such as rain or snow, a large number of particles must be tracked, updated and rendered within the scene. In this case, the PPU 155 of the Cell processor may schedule one or more SPEs 110A-H to compute the trajectories of respective batches of particles. Meanwhile, the RSX 200 accesses any texture data (e.g. snowflakes) not currently held in the video RAM 250 from the main system memory 500 via the element interconnect bus 180, the memory controller 160 and a bus interface controller 170B. The or each SPE 110A-H outputs its computed particle properties (typically coordinates and normals, indicating position and attitude) directly to the video RAM 250; the DMA controller 142A-H of the or each SPE 110A-H addresses the video RAM 250 via the bus interface controller 170B. Thus in effect the assigned SPEs become part of the video processing pipeline for the duration of the task.

In general, the PPU 155 can assign tasks in this fashion to six of the eight SPEs available; one SPE is reserved for the operating system, whilst one SPE is effectively disabled. The disabling of one SPE provides a greater level of tolerance during fabrication of the Cell processor, as it allows for one SPE to fail the fabrication process. Alternatively if all eight SPEs are functional, then the eighth SPE provides scope for redundancy in the event of subsequent failure by one of the other SPEs during the life of the Cell processor.

The PPU 155 can assign tasks to SPEs in several ways. For example, SPEs may be chained together to handle each step in a complex operation, such as accessing a DVD, video and audio decoding, and error masking, with each step being assigned to a separate SPE. Alternatively or in addition, two or more SPEs may be assigned to operate on input data in parallel, as in the particle animation example above.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using the game controller 751, remote control 752 or other suitable control device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

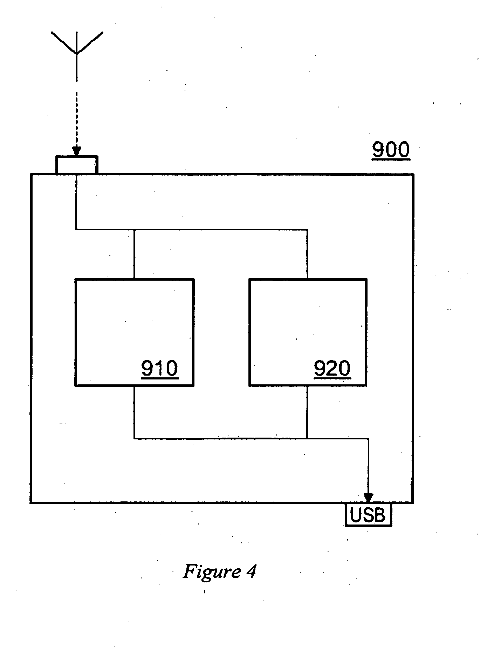

Referring now to Figure 4, a dual digital TV tuner 900 comprises a first tuner 910 and a second tuner 920 each operably coupled to an aerial, cable or satellite input. Each tuner can independently tune in to digital TV and radio channels available via the input signal, and outputs a respective audio-video data stream. A USB link to a USB port 710 of the PS3 10 provides control of the tuners, and routes the output of the tuners to the PS3 10. The PS3 processes any required non-AV data (such as electronic programme guides, teletext, or parental control data), and routes the AV data to the Reality Simulator graphics unit 200 for output to a display.

In an embodiment of the present invention, the video portion of the AV-data received by the PS3 10 is substantially decoded from the transmission signal (although optionally such decoding may be performed by the PS3 in software). The currently received video image thus decoded can be thought of as one of a succession of a pictures comprised of NxM pixels (N and M varying depending on the broadcast format).

Consequently, optical character recognition (OCR) can therefore be applied to this television-based picture in a similar fashion to the known OCR application of reading an image of handwritten or typed text, generated from a paper scanner. Such OCR techniques will be known to a person skilled in the art. The term 'optical' in 'optical character recognition' refers to the analysis of an image, but does not imply that optics are necessary to analyse an image that is already available in digital form.

In an embodiment of the present invention, a OCR search of the TV picture is performed to detect text at a range of sizes within the image. The range of text sizes may be predetermined and/or responsive to the image broadcast resolution.

In an embodiment of the present invention, the OCR search is a so-called 'brute-force' search, where every size of text under consideration is searched for at every position under consideration within the image.

To perform such a search, either an OCR search at different text sizes within the picture may be performed, or conversely copies of the picture at different and successively lower resolutions may be applied to a relatively small, fixed size text OCR search. This latter option is equivalent to normalising the text size for hypothetical text of different sizes within the image, and has the further benefit of being more computationally efficient as there will be fewer pixels overall to analyse, and potentially simpler or fewer recognition models need be used in the OCR recogniser.

In an embodiment of the present invention, the OCR recogniser is the PS3 cell processor operating under suitable instructions.

In general, the text to be searched for and recognised by an OCR recogniser will be assumed to appear within TV images according to certain conventions;

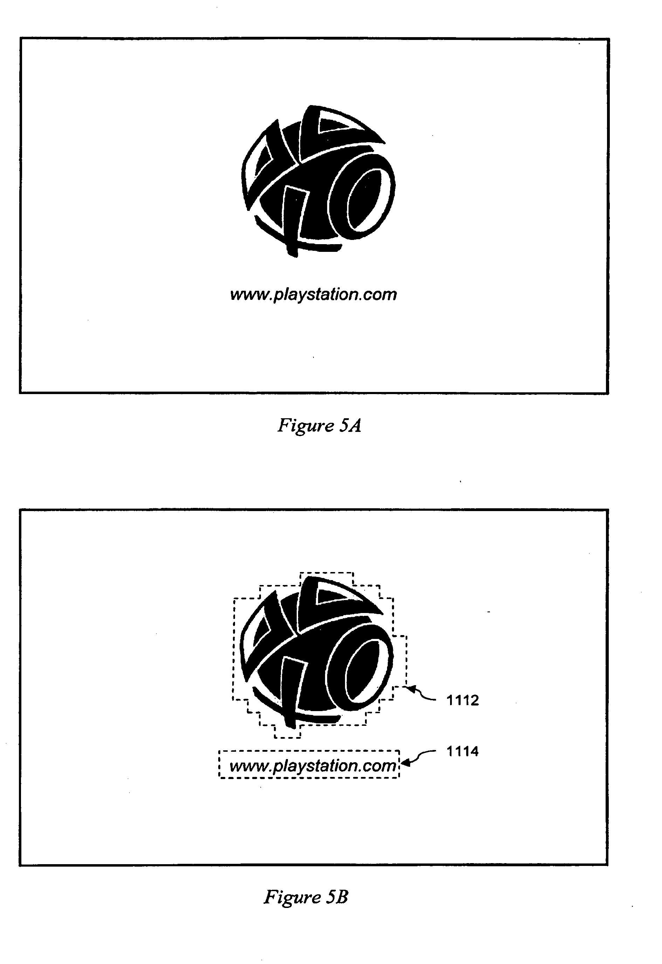

    i. As an isolated text element on a plain background, as found in some adverts (e.g. See Figure 5A as an example) or film / tv credits.

    ii. As vertically scrolling text on a plain background, as seen in some film and TV credits;

    iii. As horizontally scrolling text on a plain background, generally in the bottom quarter of the screen, as seen in news reports;

    iv. As part of a static logo (potentially semi-transparent) in one corner of the image;

v. As flashed, static text over normal programme content; typically for intro credits.

vi. As incidental text within the actual programme image, such as shop signs or book covers.

Examples i. to iv. are relatively straightforward to process, and will be discussed in turn below before looking at the latter examples.

In respect of example i., a typical advert is depicted in Figure 5A as an example. Such an advert typically ends with a plain background on which a depiction of a product or a logo, and isolated high-contrast text giving a website, phone number or catchphrase, are shown.

As noted above, a brute-force search of the image may be used to find the text. However, in an embodiment of the present invention a sub-region of the image may be readily identified for analysis, discarding the remainder:

In a typical digital television transmission, the TV image is composed of macro-blocks; typically 8x8 pixel squares. A common measure used in image compression techniques is an activity measure for the block, based upon the sum of absolute differences between neighbouring pixels within a block.

Variants of the above activity measure that favour high contrast text include generating an activity measure comprising an average of the top N pixel-difference values between neighbouring pixels in Red/Green/Blue, Hue/Saturation/Luminance, or another colour space. N may for example be 8. Such a variant activity measure will tend to identify blocks comprising strong edges and image discontinuities typical of superposed text.

In an embodiment of the present invention, such an activity measure is used to eliminate the background portion of the image by comparing the activity measure with a threshold activity level - for example slightly above that of a macro-block of plain background, or optionally slightly above a mean activity level of the image - thereby identifying areas of relative activity, such as the logo 1112 and text 1114 seen in Figure 5B.

Optionally, the vertical extent of an identified activity area can be used to provide an upper bound on the text size searched for within the activity area, further reducing computational load.

Within identified activity areas, the search for text may be conducted as discussed above. Where image rescaling is employed to achieve this, the scaling may also be limited to the identified areas of activity (or a suitable region encompassing them).

It will be appreciated that image blocks of any suitable size, or of different sizes for different text analyses, may be imposed upon the TV image independently of whether macro-blocks are available.

It will be appreciated that where there is not a significant difference in the image between successive frames within the analysis areas (e.g. as indicated by similar activity scores for blocks within the analysis area, or by analysis of image encoding data such a so-called 'P-frames', or by generating and evaluating a difference score between successive images), optionally it is not necessary to perform the OCR analysis for each received TV image. That is to say, the results obtained for one image can be carried forward to a number (one or more) of following images. However, in an embodiment of the present invention several such OCR analyses for successive similar frames may be compared to identify any character classification errors and thus improve the OCR recognition rate.

In respect of example ii., film credits are typically white text on a black background, or more generally high-contrast text with respect to a plain background. In addition, scrolling credits are also effectively static for a single TV image. Thus in an embodiment of the present invention the text is again found via a brute force search or other suitable known OCR technique as described for example i., and again optionally the relevant search area(s) of the image can be identified using block activity measures.

Notably, the fact that text is scrolling upwards can be detected by comparison between vertically shifted versions of the current image and one or more preceding images to determine if a substantial match occurs. Based upon such detection (or an average number over several image frames if the effective scroll rate is not an integer number of pixels per image frame), the scroll rate can be determined.

Thus, optionally, once the presence of scrolling credits has been detected, only an area of the TV image near the bottom of the screen needs to be analysed to determine the text of newly displayed credits, with the position of previously analysed text being predicted using the calculated scroll rate. This further reduces computational load. Further optionally, this prediction can be tested after a number of frames have passed by comparing the predicted position of some text to its actual position, thereby allowing a refinement of the scroll rate estimate if necessary and improving its accuracy.

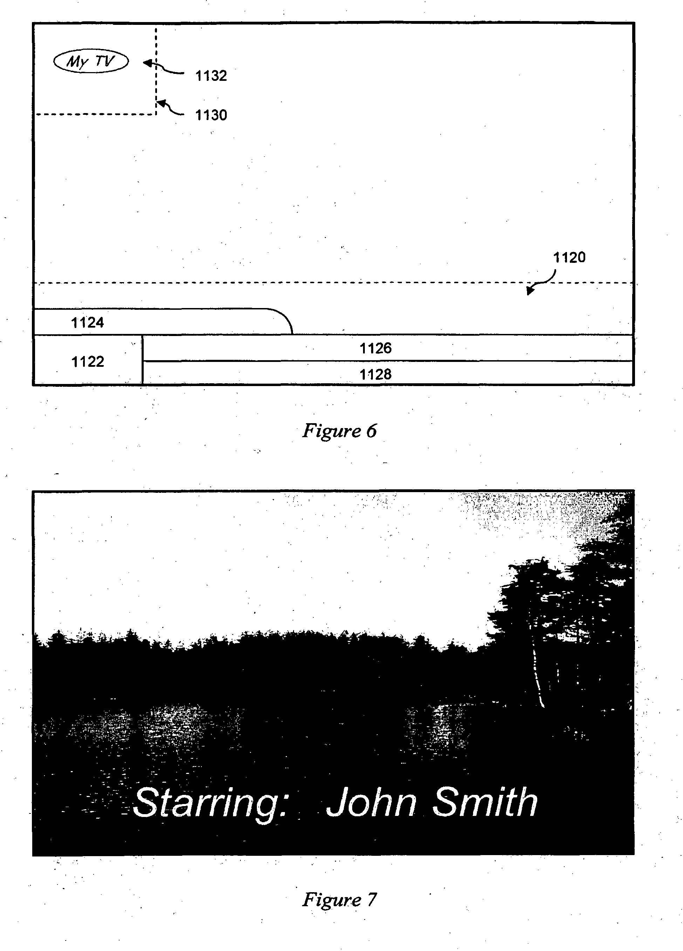

In respect of example iii., a typical so-called news banner or ticker is depicted in Figure 6. Such news banners or tickers typically provide one or more lines of horizontally scrolling text, each typically laid over a plain, static background strip (1126, 1128). Where more than one line of text is provided, often the scroll rate is different for each line. Sometimes a further line 1124 is provided for static text that is updated intermittently and is typically related to the current news coverage shown above the news banner. Finally, often a portion 1122 of the banner is static and provides a network or programme logo and/or clock.

Typically, the banner will occupy a region 1120 comprising the bottom 25% or less of the screen. In an embodiment of the present invention, to determine whether a regular structure (i.e. a news banner) is present within this portion of the screen, a rolling average of the image region 1120 is established, updating an averaged image of region 1120 according to an equation such as

$$P_{t+1}=\alpha P_t+\beta P_{image}$$

in which $P_t$ is a current average pixel value, $P_{image}$ is a new image pixel value at time t+1, and typically $\alpha \gg \beta$ and $\alpha+\beta=1$. The ratio between $\beta$ and $\beta$ determines the responsiveness of the averaging process. This ratio can change with time, allowing rapid establishment of an average (e.g. after a user changes channel) and then lengthening the effective averaging period. Optionally, the average image need not be updated every frame, but instead periodically. Also optionally, the averaged image and current image used in this calculation may be at a lower resolution that the received image (i.e. scaled down) to reduce computational load.

The result of the averaging process will be regular blocks of generally distinct colours corresponding to the banner sections described above. Such blocks can then be readily identified as separate analysis regions using known techniques (e.g. a so-called 'flood-fill' function, which identifies an image region contiguous with an initial sample pixel, the region comprising pixels within a tolerance range of the colour of that sample pixel. The horizontal and vertical bounds of the region can then be determined).

Within each corresponding region of the input image (referring back up to the original image resolution if appropriate), separate analyses of text and text scrolling speed, if any, may be made in a similar manner to that described for film credits, but using horizontal image shifts for the respective analysis areas instead of vertical.

It will be appreciated that for horizontal scrolling of text, as with vertical scrolling text, once OCR has been performed of a character or word then optionally the position of the corresponding text within the image can be predicted from scroll speed estimates, optionally avoiding the need to perform repeated OCR. Consequently again only a small portion of the banner line at the edge of the image may therefore need to be analysed to recognise new characters as they enter the image. Alternatively, recognition may be deferred until a whole word has entered the image (denoted by a space) if the OCR recogniser uses word recognition as part of its reading process.

It will be appreciated that the colour blocks of the banner region also provide initial guidance as to the approximate size of the text they will contain. Where scrolling text is detected, a more exact estimate of text size can be deduced from the vertical extent of the scrolling pixels found within the banner lines. Using this information, either the appropriate text size OCR recognition can be used, or the respective analysis regions can be scaled (normalised) accordingly for presentation to a fixed-size OCR recognizer.

It will be appreciated that other techniques may be used to determine banner structures, such as template matching for long, narrow, rectangular elements of the bottom quarter of the image. Such techniques may also be used in conjunction with image averaging as disclosed above.

Regarding example iv., many network logos are now semi-transparent in order to prevent so-called 'burn-in' on plasma televisions. As a result they are of comparatively low contrast within the image, vary in colour with successive images and are frequently internally variable due to the underlying image showing through.

Referring again to Figure 6, such logos 1132 however typically appear in one of the corners 1130 of the image (usually top-left, though this may vary with nationality), making the potential analysis region relatively small.

Optionally, to assist the OCR recogniser, the overall colour variance and internal colour variance of the logo 1132 can be significantly reduced using a similar averaging process to that described for example iii. above, and applied to one or more corner areas 1130.

Optionally, the $\alpha : \beta$ ratio can be greater than that used to identify banners.

The averaged image may then by manipulated using known techniques to improve the contrast of the logo and any associated text for the purposes of OCR; for example, a threshold based on the average luminance of the averaged image can be used to emphasise the logo by boosting the luminance of pixels above the average level and dropping it for those below. This increases the contrast within the average image, so aiding OCR. In extremis, the result is a black and white image. Because the logo is semi-transparent, it should be either consistently lighter or consistently darker than the underlying image. As a result the average luminance of the overall average image should lie somewhere between the average luminance of average image background and the average luminance of the averaged logo. Expanding the contrast about this overall average luminance will therefore distinguish the logo from the background in the majority of cases.

In the above examples, the text is generally either found within a predominantly blank or uniform image, or within a discernable region of the image that either has a uniform background itself (e.g. the banner lines) or for which the background can be made relatively uniform (e.g. via averaging).

For the final two examples in the list, however, the background may be arbitrary and comprise complex imagery.

Regarding example v., a typical in-film credit is shown in Figure 7. As before, a brute-force OCR search can be performed. However, in an embodiment of the present invention, image pre-processing may be used to improve OCR performance.

The in-film credits of example v. may be distinguished from the similarly static advert tag-lines or end-credits of example i. by the overall activity measure of the image, an overall difference measure between successive images, and/or the distribution of the colour palette within the image. In particular, the overall activity levels and/or difference measures of TV images of the type seen in example v. will be higher than those in example I whilst the colour distribution will be wider. Conversely, significant portions of successive images of the type seen in example i. will have consistently very low activity levels and difference measures and narrower colour distributions compared to images from example v. These differences can be used to distinguish the image types.

In general, in-film credits as seen in figure 7 are intended to be clearly distinguishable from the underlying image in order to assist the viewer when reading them. Typically this is achieved by making the text either significantly brighter or darker than the underlying image, and/or using a colour palette for the text that is significantly different to that of the underlying image. Another distinguishing factor is that in general the text is static, whilst the content beneath may move over successive images.

Thus one or more of the following may be used to pre-process the image;

    i. Compile a luminance histogram of the image. In general, pixels within text are of the same brightness, whereas a TV image will comprise a wide range of brightness values. Consequently pixels from uniform regions of the image and pixels from text will be associated with high values in the histogram and so can be identified. The remaining pixels can be set to a uniform colour other than that of the pixels identified using the luminance histogram.

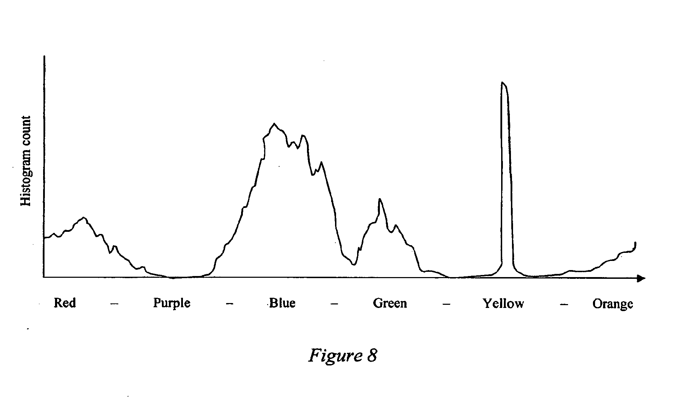

    ii. In a similar manner, compile a hue histogram of the image (see figure 8). Again, in general the hues within the underlying image will occupy a wide range and generally form broad regions of the histogram, even if there are peaks due to regions of uniform colour. In general pixels associated with the text will form an isolated peak within the histogram due to the distinctive and uniform colour palette chosen for superposed text. Such a peak can be detected by, for example, comparing the ratio of a candidate peak value with nearby values in the histogram. Ratios exceeding a threshold indicate that the associated pixels are part of the text. The histogram itself may for example comprise 128 bins, thus also quantising the hues within the image.

    iii. Use full-screen motion detection to determine if there is motion in the overall image. If there is motion, compare the current image with a preceding image and discard any pixels that are beyond a threshold difference in colour and/or luminance.

It will be appreciated that combinations of the above techniques may be used. For example, a pixel map combining the total hue-histogram score for each image pixel's hue with the deviation of the pixel's luminance from the mean will generate an image that may either be used directly for OCR, or used to filter the original image. In addition the motion values may be used, either as a mask if a threshold has been applied to determine motion, or by further modifying the pixel map or filtering the image according to the degree of change between successive frames.

Regarding example vi., incidental text within the actual programme footage will often be of moderate contrast, arbitrary rotation, subject to perspective, being partially obscured and potentially moving between frames in an arbitrary manner. As a consequence the OCR detection and recognition rates may be unacceptably low. Nevertheless, in an embodiment of the present invention a brute-force search of the image by the OCR reader may be performed if there is sufficient computing power available.

It will be appreciated that the overall motion, image activity and/or the hue or luminance distribution of the TV image may be used to distinguish examples v. and vi. from examples i. and ii.; in particular, the hue or luminance distribution within examples i and ii tends to be more polarised between two predominant hue / luminance groups than typical TV images, contains fewer blocks of activity exceeding a predetermined threshold, and where motion is present this tends to be uniform and substantially vertical or horizontal only, rather than any combination of both directions.

Thus optionally an analysis of the image based upon one or more of activity levels, horizontal and vertical motion and/or hue/luminance of the image can classify the image and indicate which OCR pre-processing approach to use, as well as providing the additional input data used to pre-process the image or identify regions of interest for OCR.

The detection of a banner structure (example iii) by averaging may be used to segregate a banner area for banner-style OCR processing whilst leaving the rest of the image area freely classifiable. Such averaging also assists to distinguish a network logo (example iv).

Consequently, when a user expresses interest in some on-screen text, for example by moving a pointing device (for example a mouse 754, controller 751 or eye-toy interface 756) over it, or using such a device to click on it or perform an equivalent selection action, the corresponding recognised text can be parsed (if not parsed already) and the PS3 can act upon it accordingly, as described later.

The above ongoing or background OCR processes enable several additional facilities to be provided to the user beyond immediate selection by a pointer; firstly, regions of the image corresponding to recognised text can be highlighted for the user, preferably in a cycled sequence; for example if the user presses the 'up' or 'down' buttons of a controller 751. Secondly, recognised text can be listed separately to the image on screen, for example as a pop-up window, for selection by a user. Optionally, the available text so listed is either that text currently recognised on-screen (e.g. at the moment the pop-up window as instigated), that text recognised on screen within a predefined preceding time period, that text recognised on screen since the user changed channel and/or that text recognised on screen during the reception of the current programme. The text can be arranged for example chronologically or alphabetically. Listing in this manner allows the user to select text of interest at their leisure.

Optionally, the above techniques may only be instigated when the user begins to move a pointing device or manipulates an input device of the PS3 in a manner suggesting they may be interested in selecting text. In this case, some data acquisition such as rolling averages and motion estimations may still continue as background activities independent of the user. It will be appreciated that if lists are provided as disclosed above, the text listed in them will be limited compared to an ongoing OCR embodiment.

As an alternative to the above ongoing or background OCR processes, in an embodiment of the present invention OCR searches are *not* performed as a matter of course during TV reception. Instead, the PS3 10 waits for the *user* to indicate text of interest by using the pointing device. This takes advantage of the user's own ability to distinguish text within a TV image, as well as saving considerable computational overhead by eliminating much background OCR activity.

In this case, OCR recognition can be performed on an analysis region centred on the pointer, such as a horizontal strip, typically once the pointer is 'clicked', (i.e. some form of selection by the user is indicated).

Optionally, the colour palette in the immediate vicinity of the pointer selection is sampled (e.g. by histogram); typically one colour (that of the text) or two colours (that of the text and a locally uniform background) will predominate in the sample area. For OCR processing, the image or analysis region can optionally be filtered to discard pixels not substantially similar to those predominating in the sample region.

The analysis region itself can optionally be dynamic, limiting itself vertically according to the comparison between local colour composition and the sample colour composition. The vertical extent determined in this fashion provides guidance as to the text size. Further, optionally horizontal expansion can be controlled in a similar fashion, allowing tolerance for gaps in which one or both of the predominant colours are missing, to allow for multiple words in a line.

Alternatively or in addition, the user may explicitly define an analysis region by defining a bounding box on screen, for example by using a pointing device to define the top-left corner of the box, and dragging this to define the bottom right corner of the box in a manner similar to that frequently used by selection tools in personal computer interfaces.

Any of the analyses or processes described in relation to examples i. to vi. may also be used as applicable within such a user-initiated analysis region.

It will be appreciated that for any of the above analyses or processes, optionally a colour palette reduction process, as known in the art, may be applied to the TV image. A typical example of such a process is found in the conversion of a full bit-depth image to a Compuserve graphics interchange format (GIF) image, which comprises a palette restricted to the 256, 64, 32 or 16 most common colours found in the original image, depending on the desired bit depth of the image.

Such a process helps to homogenise foreground and background colours, simplifying many of the text discrimination processes described herein.

Similarly, for any of the above analyses or processes, the final image or image region applied to an OCR recogniser may optionally be converted to a further reduced colour set or a grey scale, for example at a bit depth of 4 bits, to further reduce input variability in order to improve OCR accuracy.

Once a section of recognised text has been selected by one of the above techniques, it can be parsed to determine in what way the television receiver should act upon it.

As noted above, selected text may be interpreted as

    i. a web address;
    ii. a phone number for use via a VoIP link or via Bluetooth (or another suitable radio connection) and a mobile phone;
    iii. a search term for use with a search engine.

Thus the text can either be a hypertext target address (e.g. web address, VoIP number or phone number) or an argument to be submitted to a website as part of a hypertext link (e.g. using the browser convention www.searchengine.com?argument).

A web address can be identified by the presence of one or more of the key terms 'www.', '.com' or any other common extension (e.g. .org, .net., .co.uk, .us, .tv, .biz, .name), and more generally by the presence of text characters immediately preceding and following a period ('.'). An email address (also effectively an internet address) can be identified by the presence of the '@' symbol.

The receiver can then act upon the hypertext link by using a browser in the PS3 operating system to access the corresponding website, which may be displayed as a pop-up window over the TV programme, or occupy 1/3 of the screen, or be a selectable screen page (i.e. flipping or sliding between the TV programme and the web browser). It will be appreciated that where only part of a full web address is shown on screen (e.g. 'sony.com'), this can be used by the browser in conjunction with the necessary prefixes (e.g. http://www.sony.com).

A number can be interpreted as a phone number by the presence of the word 'Tel.' (or local equivalents), and/or a minimum valid length, and/or the absence of a currency sign (e.g. £, $, €, ¥) preceding it or corresponding word (e.g. 'dollars') following it, and/or the absence of commas within the number sequence. Also, certain numbers may be excluded as phone numbers, such as 1000000.

If the PS3 is equipped with a VoIP application such as Skype ®, the television receiver can then act upon the hypertext link by calling the number via a suitably configured internet connection according to a VoIP protocol.

Alternatively, if a user's mobile phone has been paired with the PS3 (i.e. the devices are aware of each other and are capable of making a Bluetooth or similar radio connection), then the PS3 may instruct the mobile phone to initiate the call over the telephone network.

Text that is not classified as either a web address or a phone number may be considered as an argument for submission to an online search engine such as Google ®, or a general information database such as Wikipedia ®. Consequently the receiver can then act upon the hypertext link by using a browser in the PS3 operating system to access a default website to which the text is supplied as an input argument.

In such cases, the intended search term often comprises more than one word. Consequently, in an embodiment of the present invention search terms comprise a sequence of words bounded by common conjunction words and symbols. For example, the text 'Starring Will Smith and Bill Pullman' can generate two separate search arguments, 'Will Smith', and 'Bill Pullman'. Examples of words and symbols that separate candidate search terms include but are not limited to 'starring', 'and', 'with', 'by', 'in', 'on' 'at', the symbols '.', ',', ':', '-', and two or more spaces in a row.

Alternatively or in addition to the above, the browser of the PS3 can determine whether a website exists that corresponds to an unclassified word, and if so display this web site in addition to or instead of results from a default search website. For example, if the TV image of figure 5A simply said 'playstation', the browser could attempt to connect to 'http://www.playstation.com'. If successful, this could be displayed as noted above if the word is selected. Optionally, websites could be tested in order of preference, such as .com, .co.uk (or local equivalent), .net and .org, selecting the first, if any, valid website found, or selecting the website with the highest page rank or other validating score as provided by a reputable search engine. The same principle can be applied to multiple-word search terms by removing the spaces between words (e.g. www.willsmith.com).

Optionally, the analysis techniques disclosed previously for horizontal and vertically scrolling text may be used to determine a context for the recognised text.

Specifically, vertically scrolling text may be assumed to be film or TV programme credits. As a result, rather than submitting unclassified text to a generalised search engine such as Google, in this context the text may be submitted by default to a media-orientated search engine such as the internet movie database (IMDB), as this is more likely to provide immediately relevant results.

Likewise, horizontally scrolling text can be assumed to be news related, and unclassified text can be submitted to a news-related search engine such as Google News or Reuters ®.

Unclassified static text found in a predominantly black image, and optionally unclassified static text in a locally moving image, may be assumed to be TV or movie credits and hence again submitted to a media-oriented search engine by default. Other static text (e.g. in a static image with an image activity score above a predetermined threshold or where less than a threshold percentage of the image has an activity threshold below a predetermined threshold) may still be considered as general text and submitted to a general search engine, and/or tested for a corresponding website, as described above.

Alternatively or in addition, the context of the image and hence the recognised text may be determined by analysis of the associated electronic programme guide (EPG) entry. For example, this may contain a term such as 'movie', 'comedy' or 'drama', indicating that text is likely to be media related, or a term such as 'news', or 'reporting', indicating that text is likely to be news related.

If ongoing or background OCR is being performed, it will be appreciated that the above parsing and classification of text can be performed prior to selection by the user, although this will increase the computational overhead.

Consequently, if such ongoing or background OCR is being performed, then additional contextual information could be used to augment the received programme as a matter of course. For example, photos of actors listed in IMDB could be retrieved automatically and overlaid on the credits, in sync with the determined scroll speed.

Likewise, in principle web-pages and search results arising from the text could be loaded and buffered as a background activity, providing immediate (or more rapid) availability by the user if they select the relevant text. Buffered sites could be dropped once the associated text is no longer visible.

However, these options could cause sudden, heavily parallel demands upon web-sites as broadcast images are received simultaneously by many television receivers, and could accrue costs for the user from their internet service provider. Consequently if provided, such features can be enabled or disabled by the user.

In an embodiment of the present invention, the PS3 10 uses its internal HDD 400 to record programmes. Optionally, the PS3 10 automatically records the currently displayed output in a circular buffer, so that if a user decides that they wanted to record a programme after already having watched half of it, then the first half is already cached and so a complete copy of the programme can be stored by completing the recording of the programme and storing it in a conventional manner. The circular buffer comprises continuous or discontinuous blocks of hard disk space as available, and the size of the buffer can be user defined in terms of Gigabytes or hours recording, subject to available HDD space. It will be appreciated that an external hard disk, for example connected via USB, may also be used to store recorded programmes. For high-definition broadcasts, a comparatively larger circular buffer is preferable.

When used in combination, the tuner 900 and PS3 10 thus typically operate as a so-called personal video recorder (PVR), also known as a digital video recorder. It will be appreciated however that other embodiments of the present invention may be built as a single bespoke unit in which case such a device would superficially resemble a so-called 'free view' set-top box, or a cable or satellite set-top box.

It will be appreciated that where such a PVR facility exists, the above OCR processes, the parsing of resultant recognised text and generation of hypertext links can be performed on recorded media as well as broadcast media.

Similarly, films and programmes played on the PS3's BD-Rom drive (for example DVDs or Blu-ray ® disks) may also be processed as described herein.

Thus as noted previously, in embodiments of the present invention the television receiver is not limited to the reception of currently broadcast television signals.

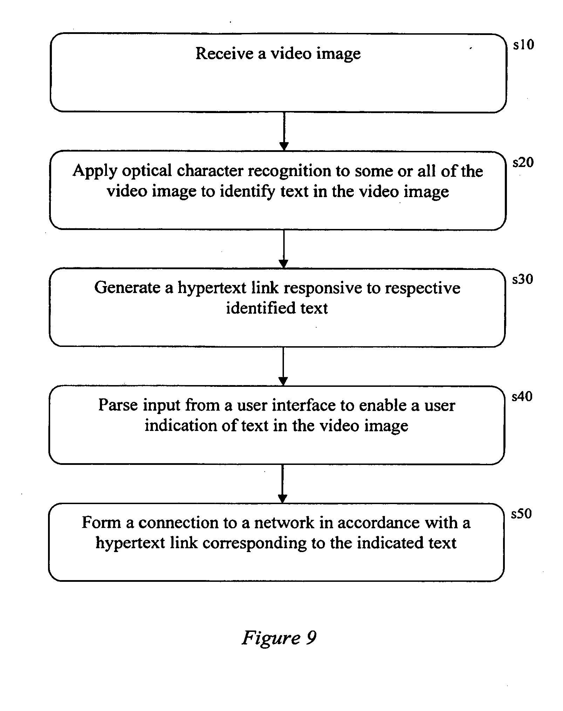

Referring now to Figure 9, a method of operation of a television receiver comprises:

In a first step s10, receiving a video image (either broadcast, recorded or pre-recorded);
In a second step s20, applying optical character recognition to some or all of the video image to identify text in the video image;
In a third step s30, generating a hypertext link responsive to respective identified text;
In a fourth step s40, parsing input from a user interface to enable a user indication of text in the video image; and
In a fifth step s50, forming a connection to a network in accordance with a hypertext link corresponding to the indicated text.

It will be appreciated that in embodiments of the present invention disclosed herein, the fourth step of the above method can precede the second step, and so a rigid interpretation of order should not be inferred.

It will also be apparent to a person skilled in the art that variations in the above method corresponding to operation of the various embodiments of the apparatus described above are considered within the scope of the present invention, including but not limited to:

i. the hypertext link (hyperlink) being an internet link;
ii. the identified text being all or part of a web address and thus used to determine the target of a hypertext link ;
iii. the identified text being used as an argument submitted to a default hypertext link address;
iv. the default hypertext link address being dependent upon the context of the image in which the text was found;
v. default hypertext links dependent upon the scroll direction of the text;
vi. the hypertext link being a phone number;
vii. the number being accessed either by VoIP or a radio link with a mobile phone;
viii. the text indicated by the user being selected using a pointer, or where background OCR is performed optionally is indicated by cycling through identified text;
ix. Such text may be listed separately for selection by the user;
x. The text may be obtained from broadcast TV images, TV images recorded by the receiver, or TV images played from pre-recorded media.

Finally, it will be appreciated that the operation of the television receiver, typically comprising a PS3 coupled to signal reception circuitry, is primarily determined by software control of the cell processor.

Thus, required adaptations to existing parts of a conventional equivalent device may be implemented in the form of a computer program product comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

References:

i. See http://en.wikipedia.org/w/index.php? title= Automatic_number_plate_recognition &oldid=175560491
ii. See http://www.omniperception.com/products/ magellan
iii. See http://www.abbyy.com/company/success_ stories.asp?param=35108

**Claims**

1. A television receiver (10, 900), comprising:

an optical character recogniser (100) to identify text in a received video image; and

a hypertext link generator (100) to generate a hypertext link responsive to respective identified text; and wherein

the television receiver is operable to form a connection to a network in accordance with the hypertext link;

the hypertext link has a default target that comprises as an argument at least part of the content of the respective identified text, and

the default target is selected according to the context of the received video image,

and **characterised in that** the default target and context are one or more selected from the list consisting of:

> i. selection of a movie-related default target in the context of vertically scrolling text;
> ii. selection of a news-related default target in the context of horizontally scrolling text; and
> iii. selection of a general search default target in the context of static text.

2. A television receiver in accordance with claim 1, comprising internet communication means; and in which:

> the network is part of the internet, and
> the hypertext link is an internet link.

3. A television receiver in accordance with claim 1, in which the context of the received video image is responsive to keywords found within a corresponding electronic programme guide entry.

4. A television receiver in accordance with claim 1, comprising internet communication means; and in which:

> the network is connected to the internet, and
> the hypertext link is a voice-over-IP internet link corresponding to a telephone number in the identified text.

5. A television receiver in accordance with any one of the preceding claims, comprising wireless communication means and in which:

> the network is a telephone network;
> the hypertext link is a telephone number; and
> the wireless communication means is operable to relay the telephone number to a user's mobile phone.

6. A television receiver in accordance with any one of the preceding claims, in which the selection interface is operable to select a hypertext link if a corresponding region of the video image substantially coincident with the respective displayed text is selected by the user.

7. A television receiver in accordance with claim 1, in which the selection interface is operable to list hypertext links within a window on-screen.

8. A television receiver in accordance with claim 7, in which the listed hypertext links are hypertext links generated either during the currently received program or during a predetermined preceding time period.

9. A television receiver in accordance with any one of the preceding claims, comprising video recording means.

10. A television receiver in accordance with any one of the preceding claims, in which the received video images are one or more selected from the list consisting of:

> i. broadcast television images;
> ii. video images recorded by a video recording means of the television receiver; and
> iii. video images from a read-only medium played back by a playback means of the television receiver.

11. A method of operation of a television receiver, comprising the steps of:

> receiving (s10) a video image;
> applying (s20) optical character recognition to some or all of the video image to identify text in the video image;
> generating (s30) a hypertext link responsive to respective identified text;
> selecting a default hypertext link target according to the context of the received video image; and
> forming (s50) a connection to a network in accordance with the default hypertext link target, the default hypertext link target further comprising as an argument at least part of the content of the respective identified text,
> and **characterised by** the default target and context being one or more selected from the list consisting of:
>
> > i. selection of a movie-related default target in the context of vertically scrolling text;
> > ii. selection of a news-related default target in the context of horizontally scrolling text; and
> > iii. selection of a general search default target in the context of static text.

12. A method according to claim 11, in which:

the network is part of the internet; and
the hypertext link is an internet link.

13. A method according to claim 11, in which
the network is part of the internet; and
the hypertext link is a voice-over-IP internet link corresponding to a telephone number in the identified text.

14. A method according to claim 11, in which
the network is a telephone network; and
the hypertext link is a telephone number,
and comprising the step of:

relaying the telephone number to a user's mobile phone.

15. A method according to any one of claims 11 to 14 in which the received video images are one or more selected from the list consisting of:

i. broadcast television images;
ii. video images recorded by a video recording means of the television receiver; and
iii. video images from a read-only medium played back by a playback means of the television receiver.

16. A data carrier comprising computer readable instructions that, when executed by a computer, cause the computer to operate as a television receiver according to any one of claims 1 to 10.

17. A data carrier comprising computer readable instructions that, when executed by a computer, cause the computer to carry out the method of any one of claims 11 to 15.

18. A data signal comprising computer readable instructions that, when executed by a computer, cause the computer to operate as a television receiver according to any one of claims 1 to 10.

19. A data signal comprising computer readable instructions that, when executed by a computer, cause the computer to carry out the method of any one of claims 11 to 15.

**Patentansprüche**

1. Fernsehempfänger (10, 900), der Folgendes umfasst:

eine optische Zeichenerkennungsvorrichtung (100) zum Identifizieren von Text in einem empfangenen Videobild; und
einen Hypertext-Link-Generator (100) zum Generieren eines Hypertext-Links in Reaktion auf jeweiligen identifizierten Text; und wobei
der Fernsehempfänger befähigt ist, eine Verbindung zu einem Netz gemäß dem Hypertext-Link zu bilden;
der Hypertext-Link ein standardmäßig vorgegebenes Ziel hat, das als ein Argument mindestens einen Teil des Inhalts des jeweiligen identifizierten Textes umfasst, und
das standardmäßig vorgegebene Ziel gemäß dem Kontext des empfangenen Videobildes ausgewählt wird,
und **dadurch gekennzeichnet, dass** das standardmäßig vorgegebene Ziel und der Kontext eines oder mehrere sind, die aus folgender Liste ausgewählt sind:

i. Auswahl eines spielfilmbezogenen standardmäßig vorgegebenen Ziels im Kontext eines vertikal laufenden Textes;
ii. Auswahl eines nachrichtenbezogenen standardmäßig vorgegebenen Ziels im Kontext eines horizontal laufenden Textes; und
iii. Auswahl eines allgemeinen standardmäßig vorgegebenen Suchziels im Kontext eines statischen Textes.

2. Fernsehempfänger nach Anspruch 1, der ein Internet-Kommunikationsmittel umfasst; und wobei:

das Netz Teil des Internet ist, und
der Hypertext-Link ein Internet-Link ist.

3. Fernsehempfänger nach Anspruch 1, wobei der Kontext des empfangenen Videobildes die Reaktion auf Stichwörter ist, die in einem entsprechenden elektronischen Programmführereintrag gefunden werden.

4. Fernsehempfänger nach Anspruch 1, der ein Internet-Kommunikationsmittel umfasst, und wobei:

das Netz mit dem Internet verbunden ist, und
der Hypertext-Link ein Voice-over-IP-Internet-Link ist, der einer Telefonnummer in dem identifizierten Text entspricht.

5. Fernsehempfänger nach einem der vorangehenden Ansprüche, der ein Drahtloskommunikationsmittel umfasst, und wobei:

das Netz ein Telefonnetz ist;
der Hypertext-Link eine Telefonnummer ist; und

das Drahtloskommunikationsmittel befähigt ist, die Telefonnummer an das Mobiltelefon eines Nutzers weiterzuleiten.

6. Fernsehempfänger nach einem der vorangehenden Ansprüche, wobei die Auswahlschnittstelle befähigt ist, einen Hypertext-Link auszuwählen, wenn eine entsprechende Region des Videobildes, die im Wesentlichen mit dem jeweiligen angezeigten Text übereinstimmt, durch den Nutzer ausgewählt wird.

7. Fernsehempfänger nach Anspruch 1, wobei die Auswahlschnittstelle befähigt ist, Hypertext-Links innerhalb eines Fensters auf dem Bildschirm aufzulisten.

8. Fernsehempfänger nach Anspruch 7, wobei die aufgelisteten Hypertext-Links Hypertext-Links sind, die entweder während des momentan empfangenen Programms oder während eines vorgegebenen vorausgehenden Zeitraums generiert werden.

9. Fernsehempfänger nach einem der vorangehenden Ansprüche, der ein Videoaufzeichnungsmittel umfasst.

10. Fernsehempfänger nach einem der vorangehenden Ansprüche, wobei die empfangenen Videobilder eines oder mehrere sind, die aus folgender Liste ausgewählt sind:

i. ausgestrahlte Fernsehbilder;
ii. Videobilder, die durch ein Videoaufzeichnungsmittel des Fernsehempfängers aufgezeichnet werden; und
iii. Videobilder von einem Nurlesemedium, die durch ein Wiedergabemittel des Fernsehempfängers wiedergegeben werden.

11. Verfahren zum Betreiben eines Fernsehempfängers, das folgende Schritte umfasst:

Empfangen (s10) eines Videobildes;
Anwenden (s20) einer optischen Zeichenerkennung auf einige oder alle Videobilder zum Identifizieren von Text in dem Videobild;
Generieren (s30) eines Hypertext-Links in Reaktion auf jeweiligen identifizierten Text;
Auswählen eines standardmäßig vorgegebenen Hypertext-Link-Ziels gemäß dem Kontext des empfangenen Videobildes; und
Bilden (s50) einer Verbindung zu einem Netz gemäß dem standardmäßig vorgegebenen Hypertext-Link-Ziel, wobei das standardmäßig vorgegebene Hypertext-Link-Ziel des Weiteren als ein Argument mindestens einen Teil des Inhalts des jeweiligen identifizierten Textes umfasst, und **dadurch gekennzeichnet, dass** das standardmäßig vorgegebene Ziel und der Kontext eines oder mehrere sind, die aus folgender Liste ausgewählt sind:

i. Auswahl eines spielfilmbezogenen standardmäßig vorgegebenen Ziels im Kontext eines vertikal laufenden Textes;
ii. Auswahl eines nachrichtenbezogenen standardmäßig vorgegebenen Ziels im Kontext eines horizontal laufenden Textes; und
iii. Auswahl eines allgemeinen standardmäßig vorgegebenen Suchziels im Kontext eines statischen Textes.

12. Verfahren nach Anspruch 11, wobei:

das Netz Teil des Internet ist, und
der Hypertext-Link ein Internet-Link ist.

13. Verfahren nach Anspruch 11, wobei
das Netz Teil des Internet ist, und
der Hypertext-Link ein Voice-over-IP-Internet-Link ist, der einer Telefonnummer in dem identifizierten Text entspricht.

14. Verfahren nach Anspruch 11, wobei
das Netz ein Telefonnetz ist; und
der Hypertext-Link eine Telefonnummer ist;
und wobei das Verfahren den folgenden Schritt umfasst:

Weiterleiten der Telefonnummer an das Mobiltelefon eines Nutzers.

15. Verfahren nach einem der Ansprüche 11 bis 14, wobei die empfangenen Videobilder eines oder mehrere sind, die aus folgender Liste ausgewählt sind:

i. ausgestrahlte Fernsehbilder;
ii. Videobilder, die durch ein Videoaufzeichnungsmittel des Fernsehempfängers aufgezeichnet werden; und
iii. Videobilder von einem Nurlesemedium, die durch ein Wiedergabemittel des Fernsehempfängers wiedergegeben werden.

16. Datenträger, der computerlesbare Instruktionen umfasst, die, wenn sie durch einen Computer ausgeführt werden, den Computer veranlassen, als ein Fernsehempfänger nach einem der Ansprüche 1 bis 10 zu arbeiten.

17. Datenträger, der computerlesbare Instruktionen umfasst, die, wenn sie durch einen Computer ausgeführt werden, den Computer veranlassen, das Verfahren nach einem der Ansprüche 11 bis 15 auszuführen.

**18.** Datensignal, das computerlesbare Instruktionen umfasst, die, wenn sie durch einen Computer ausgeführt werden, den Computer veranlassen, als ein Fernsehempfänger nach einem der Ansprüche 1 bis 10 zu arbeiten.

**19.** Datensignal, das computerlesbare Instruktionen umfasst, die, wenn sie durch einen Computer ausgeführt werden, den Computer veranlassen, das Verfahren nach einem der Ansprüche 11 bis 15 auszuführen.

**Revendications**

**1.** Récepteur de télévision (10, 900), comprenant :

un dispositif de reconnaissance de caractères optiques (100) destiné à identifier un texte dans une image vidéo reçue ; et
un générateur de lien hypertexte (100) destiné à générer un lien hypertexte en réponse à un texte identifié respectif ; et
le récepteur de télévision permettant de former une connexion à un réseau selon le lien hypertexte ;
le lien hypertexte ayant une cible par défaut qui comprend comme argument au moins une partie du contenu du texte identifié respectif, et
la cible par défaut étant sélectionnée selon le contexte de l'image vidéo reçue,
et **caractérisé en ce que** la cible et le contexte par défaut sont sélectionnés, un ou plusieurs, à partir de la liste comportant :

i. la sélection d'une cible par défaut concernant un film dans le contexte d'un texte à défilement vertical ;
ii. la sélection d'une cible par défaut concernant des nouvelles dans le contexte d'un texte à défilement horizontal ; et
iii. la sélection d'une cible par défaut de recherche générale dans le contexte d'un texte statique.

**2.** Récepteur de télévision selon la revendication 1, comprenant des moyens de communication Internet ; et dans lequel :

le réseau faisant partie d'Internet, et
le lien hypertexte étant un lien Internet.

**3.** Récepteur de télévision selon la revendication 1, dans lequel le contexte de l'image vidéo reçue est réactif à des mots clés trouvés à l'intérieur d'une entrée de guide de programme électronique correspondante.

**4.** Récepteur de télévision selon la revendication 1, comprenant des moyens de communication Internet ; et dans lequel :

le réseau étant connecté à Internet, et
le lien hypertexte étant un lien Internet voix sur IP correspondant à un numéro de téléphone dans le texte identifié.

**5.** Récepteur de télévision selon l'une quelconque des revendications précédentes, comprenant des moyens de communication sans fil et dans lequel:

le réseau étant un réseau téléphonique ;
le lien hypertexte étant un numéro de téléphone ; et
les moyens de communication sans fil permettant de relayer le numéro de téléphone vers le téléphone mobile d'un utilisateur.

**6.** Récepteur de télévision selon l'une quelconque des revendications précédentes, dans lequel l'interface de sélection permet de sélectionner un lien hypertexte si une région correspondante de l'image vidéo coïncidant pratiquement avec le texte affiché respectif est sélectionnée par l'utilisateur.

**7.** Récepteur de télévision selon la revendication 1, dans lequel l'interface de sélection permet de lister des liens hypertexte à l'intérieur d'une fenêtre sur l'écran.

**8.** Récepteur de télévision selon la revendication 7, dans lequel les liens hypertexte listés sont des liens hypertexte générés durant le programme en cours de réception ou durant une période de temps précédente prédéterminée.

**9.** Récepteur de télévision selon l'une quelconque des revendications précédentes, comprenant des moyens d'enregistrement vidéo.

**10.** Récepteur de télévision selon l'une quelconque des revendications précédentes, dans lequel les images vidéo reçues sont sélectionnées, une ou plusieurs, à partir de la liste comportant :

i. des images de diffusion télévisuelle ;
ii. des images vidéo enregistrées par un moyen d'enregistrement vidéo du récepteur de télévision ; et
iii. des images vidéo reçues à partir d'un support en lecture seule lues par un moyen de lecture du récepteur de télévision.

**11.** Procédé de fonctionnement d'un récepteur de télévision, comprenant les étapes suivantes :

recevoir (s10) une image vidéo ;

appliquer (s20) une reconnaissance de caractères optiques à une partie ou à la totalité de l'image vidéo pour identifier un texte dans l'image vidéo ;

générer (s30) un lien hypertexte en réponse à un texte identifié respectif ;

sélectionner une cible de lien hypertexte par défaut selon le contexte de l'image vidéo reçue ; et

former (s50) une connexion à un réseau selon la cible de lien hypertexte par défaut, la cible de lien hypertexte par défaut comportant en outre comme argument au moins une partie du contenu du texte identifié respectif,

et **caractérisé en ce que** la cible et le contexte par défaut sont sélectionnés, un ou plusieurs, à partir de la liste comportant :

 i. la sélection d'une cible par défaut concernant un film dans le contexte d'un texte à défilement vertical ;
 ii. la sélection d'une cible par défaut concernant des nouvelles dans le contexte d'un texte à défilement horizontal ; et
 iii. la sélection d'une cible par défaut de recherche générale dans le contexte d'un texte statique.

**12.** Procédé selon la revendication 11, dans lequel :

 le réseau fait partie d'Internet ; et
 le lien hypertexte est un lien Internet.

**13.** Procédé selon la revendication 11, dans lequel :

 le réseau fait partie d'Internet ; et
 le lien hypertexte est un lien Internet voix sur IP correspondant à un numéro de téléphone dans le texte identifié.

**14.** Procédé selon la revendication 11, dans lequel :

 le réseau est un réseau téléphonique ; et
 le lien hypertexte est un numéro de téléphone, et comprenant l'étape consistant à :

  relayer le numéro de téléphone vers le téléphone mobile d'un utilisateur.

**15.** Procédé selon l'une quelconque des revendications 11 à 14, dans lequel les images vidéo reçues sont sélectionnées, une ou plusieurs, à partir de la liste comportant :

 i. des images de diffusion télévisuelle ;
 ii. des images vidéo enregistrées par un moyen d'enregistrement vidéo du récepteur de télévision ; et

 iii. des images vidéo reçues à partir d'un support en lecture seule lues par un moyen de lecture du récepteur de télévision.

**16.** Support de données comprenant des instructions lisibles par ordinateur qui, lorsqu'elles sont exécutées par un ordinateur, amènent l'ordinateur à fonctionner comme un récepteur de télévision selon l'une quelconque des revendications 1 à 10.

**17.** Support de données comprenant des instructions lisibles par ordinateur qui, lorsqu'elles sont exécutées par un ordinateur, amènent l'ordinateur à mettre en oeuvre le procédé selon l'une quelconque des revendications 11 à 15.

**18.** Signal de données comprenant des instructions lisibles par ordinateur qui, lorsqu'elles sont exécutées par un ordinateur, amènent l'ordinateur à fonctionner comme un récepteur de télévision selon l'une quelconque des revendications 1 à 10.

**19.** Signal de données comprenant des instructions lisibles par ordinateur qui, lorsqu'elles sont exécutées par un ordinateur, amènent l'ordinateur à mettre en oeuvre le procédé selon l'une quelconque des revendications 11 à 15.

Fig. 1

EP 2 109 313 B1

Fig. 2

Fig. 3

900

910

920

USB

*Figure 4*

*Figure 5A*

1112

1114

*Figure 5B*

*Figure 6*

*Figure 7*

*Figure 8*

Receive a video image   s10

Apply optical character recognition to some or all of the video image to identify text in the video image   s20

Generate a hypertext link responsive to respective identified text   s30

Parse input from a user interface to enable a user indication of text in the video image   s40

Form a connection to a network in accordance with a hypertext link corresponding to the indicated text   s50

*Figure 9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6937766 B1, Wilf
- US 2008016142 A, Schneider